Europäisches Patentamt

European Patent Office

Office européen des brevets

(19)

(11) Veröffentlichungsnummer: **0 309 395**
A1

## (12) EUROPÄISCHE PATENTANMELDUNG

(21) Anmeldenummer: 88810592.1

(22) Anmeldetag: 29.08.88

(51) Int. Cl.4: **G 02 B 23/16**
F 16 M 11/10

(30) Priorität: 08.09.87 CH 3451/87

(43) Veröffentlichungstag der Anmeldung:
29.03.89 Patentblatt 89/13

(84) Benannte Vertragsstaaten: **DE FR GB IT SE**

(71) Anmelder: **KERN & CO. AG**
**CH-5001 Aarau (CH)**

(72) Erfinder: **Hoffmann, Dieter**
**Gartenweg 2**
**CH-5033 Buchs (CH)**

**Wahlen, Erika**
**Bläuenstrasse 14c**
**CH-5015 Erlinsbach (CH)**

(74) Vertreter: **Seeger, Jan**
**c/o Kern & Co. AG**
**CH-5001 Aarau (CH)**

(54) Fernrohr.

(57) Im Fernrohrkörper (3, 5) ist eine Lagerbuchse (7) mit einer seitlichen Oeffnung (8) vorgesehen, welche eine einfache Montage und Demontage des Fernrohres von einer Schwenkachse (6) erlaubt, ohne dass dabei ein Ausbau der Achse (6) aus ihren Lagern und mit dieser verbundener Winkelmesssysteme erforderlich ist.

EP 0 309 395 A1

Bundesdruckerei Berlin

## Beschreibung

### Fernrohr

Die Erfindung betrifft ein Fernrohr mit Mitteln zu dessen Lagerung auf einer Schwenkachse.

Zur Lagerung von Fernrohren auf Schwenkachsen ist es bekannt, die entsprechenden Fernrohrkörper mit einem oder mehreren Achszapfen zu versehen, welche in geeigneten Lagern drehbar sind. Es ist auch bekannt, Fernrohrkörper mit Buchsen für Steckachsen auszubilden, welche eine vereinfachte Montage der Fernrohre in Messgeräten, wie Theodoliten oder Nivellieren ermöglichen können. In vielen Fällen ist eine Montage oder Demontage eines Fernrohrs auf einer Schwenkachse umständlich, wenn dabei gleichzeitig Achsen oder Zapfen montiert oder demontiert werden müssen.

Aufgabe der Erfindung ist es, ein auf einer Schwenkachse gelagertes Fernrohr so auszubilden, dass bei Montage und Demontage des Fernrohres nicht auch die Schwenkachse montiert und justiert werden muss.

Diese Aufgabe wird gemäss der Erfindung durch die Merkmale des Patentanspruches 1 gelöst. Vorteilhafte Weiterbildungen sind Gegenstand der Unteransprüche.

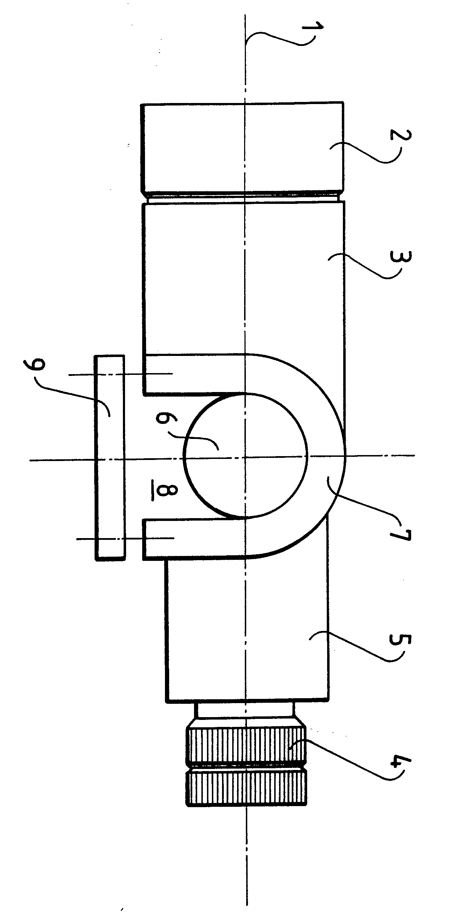

Ein Ausführungsbeispiel der Erfindung wird im folgenden anhand der Zeichnung beschrieben. Deren Figur zeigt

eine schematische Seitenansicht eines erfindungsgemässen Fernrohres mit einer Schwenkachse.

Ein Fernrohr an sich bekannter Art mit einer optischen Achse 1 besteht aus einem Objektiv 2, einem objektivseitigen Fernrohrkörper 3, einem Okular 4 und einem okularseitigen Fernrohrkörper 5, welche alle eine zylindrische Form haben. Zur Aufnahme einer quer zur optischen Achse 1 liegenden Schwenkachse 6 ist zwischen dem objektivseitigen und em okularseitigen Fernrohrkörper 3, bzw. 5 eine zylindrische Lagerbuchse 7 quer eingefügt. Diese buchse 7 verbindet mechanisch die Körper 3 und 5 und ist wie dargestellt nach unten einseitig offen ausgeführt. Mit der Oeffnung 8 der Lagerbuchse 7 kann das ganze Fernrohr einfach auf die Schwenkachse 6 aufgesetzt und auch von dieser abgenommen werden.

Zum Durchlass des optischen Strahlenganges vom Objektiv 2 zum Okular 4 besitzen Schwenkachse 6 und Lagerbuchse 7 zentrale Durchlassöffnungen, welche in der Zeichnung nicht erkennbar sind. Nach dem Aufsetzen der Buchse 7 auf die Achse 6 wird auf die offene Seite 8 der Buchse 7 zur Erhöhung der mechanischen Stabilität eine Platte 9 aufgeschraubt. Die Achse 6 ist zweckmässig mit der Buchse 7 durch nicht mit dargestellte Schrauben fest verbunden und zur Fernrohrschwenkung in seitlich neben dem Fernrohr befindlichen Drehlagern gelagert. Soll der Höhenwinkel des Fernrohres gemessen werden, so trägt die Achse neben dem Fernrohr noch einen Höhenkreis, dessen Kreisablesesystem dann Teil eines Theodoliten ist.

Insbesondere in letztgenanntem Fall ist eine Demontage des Fernrohres gegenüber bekannten Konstruktionen wesentlich einfacher, da eine Demontage und Neujustierung der Schwenkachse 6 nebst Kreisablesesystem nicht erforderlich ist. Im dargestellten Ausführungsbeispiel schneiden sich die optische Achse 1 und die Schwenkachse 6. Die Erfindung ist aber auch bei exzentrischen Achslagen mit Vorteil anwendbar.

### Patentansprüche

1. Fernrohr mit Mitteln zur Lagerung auf einer Schwenkachse (6), dadurch gekennzeichnet, dass der Fernrohrkörper (3, 5) eine quer zu dessen Achse (1) verlaufende, über einen Teil (8) ihres Umfanges seitlich offene Lagerbuchse (7) für die Schwenkachse (6) aufweist.

2. Fernrohr gemäss Anspruch 1, dadurch gekennzeichnet, dass die Achsen von Fernrohrkörper (3, 5) und Schwenkachse (6) einander schneiden.

3. Fernrohr gemäss Anspruch 1, dadurch gekennzeichnet, dass Mittel zur Befestigung des Fernrohrkörpers (3, 5) auf der Schwenkachse (6) vorgesehen sind.

4. Fernrohr gemäss Anspruch 1, dadurch gekennzeichnet, dass zur Stabilisierung des Fernrohrkörpers (3, 5) Mittel (9) vorgesehen sind, welche an diesem lösbar befestigt werden können und die seitliche Oeffnung (8) der Lagerbuchse (7) überbrücken.

5. Fernrohr gemäss Anspruch 1, dadurch gekennzeichnet, dass es Teil eines Vermessungsgerätes, insbesondere eines Theodoliten ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 970 274 (E.E. RESK) <br> * Figuren 1,2,5; Zusammenfassung * <br> --- | 1,2 | G 02 B 23/16 <br> F 16 M 11/10 |
| A | US-A-1 827 135 (L.A. BLAKE) <br> * Figur 1 * <br> --- | 1,4 | |
| A | US-A-4 470 672 (C.O. DRAUGLIS) <br> * Figur 1; Zusammenfassung; Spalte 4, Zeilen 8-12 * <br> ----- | 5 | |

|  |  |  | RECHERCHIERTE SACHGEBIETE (Int. Cl.4) |
|---|---|---|---|
|  |  |  | G 02 B <br> G 01 C <br> F 16 M <br> F 41 G |

Der vorliegende Recherchenbericht wurde für alle Patentansprüche erstellt

| Recherchenort | Abschlußdatum der Recherche | Prüfer |
|---|---|---|
| DEN HAAG | 05-12-1988 | VAN DOREMALEN,J.C.H. |

EPO FORM 1503 03.82 (P0403)